# EUROPEAN PATENT SPECIFICATION

(11) **EP 0 708 573 B1**
(45) Date of publication and mention of the grant of the patent: **20.08.2003**
(21) Application number: 95850176.9
(22) Date of filing: 12.10.1995
(51) Int. Cl.: H04Q 7/34

(54) **Method and device for supervision of mobile telephone systems**
Verfahren und Vorrichtung zur Überwachung von mobilen Fernsprechsystemen
Procédé et dispositif de supervision pour des systèmes de téléphonie mobile

(30) Priority: 20.10.1994 SE 9403586
(43) Date of publication of application: 24.04.1996
(73) Proprietor: TELIA AB, 123 86 Farsta (SE)
(72) Inventor: Lidbrink, Stefan, SE-112 45 Stockholm (SE); Rosenlund, Henrik, SE-128 62 Sköndal (SE)
(74) Representative: Hopfgarten, Nils

(56) References cited:
- WO-A-93/15569
- GB-A- 2 252 475
- INTERNATIONAL CONFERENCE ON DIGITAL LAND MOBILE RADIO COMMUNICATIONS, 30 June 1987, pages 497-506, XP002011123 KALL J ET AL: "MAINTENANCE INFORMATION IN THE GSM SYSTEM"
- REVIEW OF THE ELECTRICAL COMMUNICATION LABORATORIES, MARCH 1982, JAPAN, vol. 30, no. 2, ISSN 0029-067X, pages 279-286, XP002032526 MITSUISHI T ET AL: "Supervisory system design for medium capacity cell site system (land mobile telephone system)"

## Description

### TECHNICAL FIELD

The present invention relates to supervision of telecommunication systems; at the supervision are inter alia used counters which are arranged in the different parts of the system. Further there are used devices which control the current traffic situation. The knowledge which exists regarding the variations of the traffic during different periods of time is furthermore rationally used. Accordingly the invention allows that the supervision of telecommunication systems, especially mobile telephone systems, is made more effective and that faults are rapidly attended to.

### PRIOR ART

Previously have been suggested different systems and procedures to control a mobile telephone system by the American patent document 5289526, where is shown a system consisting of a central control unit which transmits control signals to the base stations and which has possibility to detect nonconformities in the transmission, as for instance phase faults, wave form defects etc. Further is shown by the American patent document 4443661 a method for detecting faults in a mobile telephone system. The method implies that the output on the receiver for the control channel in a base station is reported to a central test unit. If no signal is reported from a certain receiver within a certain time interval, certain measures are taken, among other things a test signal is transmitted to this receiver. If no answer is received, the test apparatus indicates that a fault exists in the base station.

WO 93 15569 A describes embodiments of a method and apparatus for quantitative testing of radiotelephony network. An embodiment includes a computer that causes various transceivers to place calls on the network. The computer receives or determines operational parameters of the transceivers or transmission quality associated with those calls and stores the operational parameters for later data processing. Systems for displacing the stored operational parameters on a map are also disclosed.

### DESCRIPTION OF THE INVENTION

### TECHNICAL PROBLEM

The supervision of a mobile telephone system to-day is in the main performed by control of the traffic load and different counters in the mobile telephone switches, MTX and MSC. This control is to-day mostly performed manually, which causes that a long time may elapse from the occurance of a fault to detection of the fault. As an example can be mentioned that it occurs that base stations are idle for a longer period without responsible staff being informed. For certain important counters there are to-day threshold values which can be arranged in the switches. If the levels for these thresholds are exceeded, an alarm is generated to a supervisory center. The thresholds must be set high to cope with all natural variations in the mobile telephone traffic. This traffic varies for each base station with the time in the twenty four hours, week day, and time of the year. The statistics are however to a high degree repeated, as the same conditions regarding time exist. For instance is a normal friday forenoon one week much similar to the next week's friday forenoon. The problem with using fixed threshold values are consequently that the system becomes very blunt to use, because all natural variations must be kept below the threshold value, in order not to cause false alarm too often.

### THE SOLUTION

The present invention relates in the first place to a method of supervision of preferably mobile telephone systems where parameters in the system are registered, and obtained values of the parameters indicate the functionality of the system. Threshold values for the different parameters are appointed with regard to season, week day, point of time of 24 hours, the current traffic situation etc. The obtained information is stored and used at appointment of future threshold values. The obtained history is further used, with an increasing accurcy, to appoint if faults in the system exist and early pay attention to this.

The method consequently allows that threshold values can be continuously adjusted when the system is in operation. Further the threshold values are adjusted individually for the different parts of the system, at which also regard is taken to trend changes which are registered.

In a further development of the invention an alarm is given when the threshold values are not fulfilled, and that the part of the system where the fault has been indicated is appointed. The invention further allows that trend changes can be predicted with regard to the present traffic situation and the stored history.

The invention further relates to a device for supervision of preferably mobile telephone systems where means in the system register parameter values. The mentioned parameter values indicate the functionality of the system. Threshold values in the system are appointed and the mentioned threshold values are given to the different parts of the system and shall be fulfilled. The device at that takes into consideration the current traffic situation and chronological data. The device appoints threshold values with an increasing accuracy in pace with that the stored information becomes more and more complete. When mentioned threshold values are not fulfilled, the device is arranged to start an alarm and appoint defective parts in the system. At the appointment of the threshold values the device takes into consideration both registered parameter values and the traffic situation. Adjustment of the threshold values are in this way possible to perform continuously in the different parts of the system. The device is arranged to appoint threshold values with regard to the traffic situation, season, week day, time of the day etc. The device further appoints changes in the traffic situation and predict changes in the traffic situation. The threshold values are appointed with regard to this. The device, which stores the previous history, appoints in this way the threshold values with an increased accuracy. In a further development of the invention the device is arranged be predict a current traffic situation and initially appoint the threshold values. Appointment of faults in the system and its different parts will at that be possible to perform with an increased accuracy.

### ADVANTAGES

The present invention allows that the threshold values for supervision of telephone systems can be continuously updated with regard to the current traffic situation. Further it is possible to predict the traffic situation for different days and initially appoint threshold values which the different parameters in the system shall fulfil. Possibility at that exists to take into consideration for instance week day, time of the twenty-four hours, season etc. The invention in this way allows that the parameter values are appointed individually in the different parts of the system with regard to the current traffic situation. This together with the fact that the parameter values are appointed with an ever increasing accuracy results in that faults in the telecommunication system can be detected in an ever earlier stage. Consequently it is possible to obtain a system which has a high functionality.

### DESCRIPTION OF FIGURES

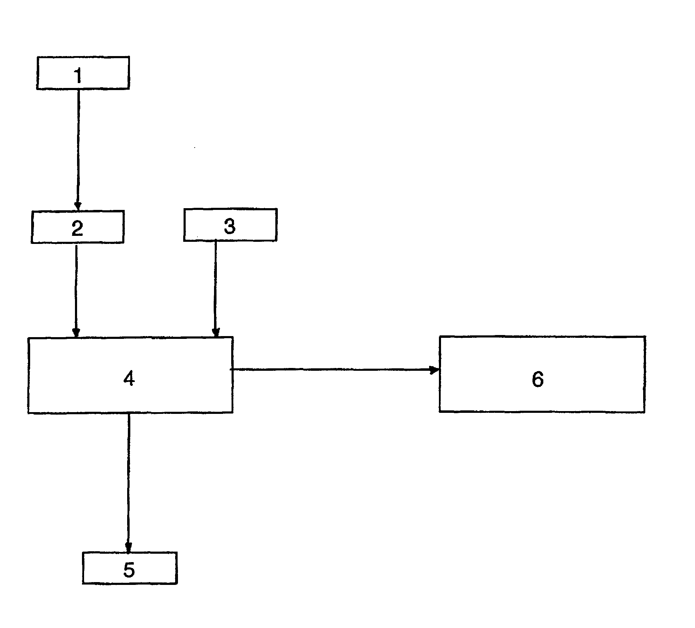

The figure shows the fundamental build-up of the invention.

### PREFERRED EMBODIMENT

In the following the idea of invention is described with reference to the figure and the terms therein.

The idea of the invention is to introduce a so called expert system for control of system load, other counters in the switches and, if any, other indata, for instance signal strength data. An expert system can, based on previously experienced levels, predict within which limits different parameters should be. By the fact that the expert system initially can be "taught" and continually "further educated", the supervision of the traffic and the counters can be based on data which is normal for respective base station and point of time. By this a considerably more delicate network for detection of faults in the system will be achieved, which results in that faults in the system will be detected earlier.

In a telecommunication system including for instance a stationary telephone network there are switching functions like exchanges and radio communication over base stations distributed in the network. In the different parts of the telecommunication network are counters and other devices arranged to register important data of the traffic. The mentioned data can for instance consist of the current traffic intensity, the signal strength on different channels, the existence of blockings in different parts of the network etc. The information from the telecommunication network, 1, is accordingly transferred to traffic registering means, 2. This information is transferred to an expert system, 3. To the expert system are also other information, 4, transferred which is used by the expert system. The received information is stored in a data base, 5. In the data base is in this way stored different kinds of information regarding the traffic and the traffic managing in the telecommunication system. The information is at this referrable to different points of time of the twenty-four hours, different weekdays, seasons etc. The expert system, 4, appoints, on the basis of the mentioned information, threshold values which the different parameters in the system shall contain. These calculations are performed continuously during the whole operating time of the system, at which the mentioned threshold values can be related to the real, existing situation.

The received information is transferred to a supervisory system, 6. When a parameter does not fulfil the mentioned threshold value, an alarm signal is given in the supervisory system. The alarm signal indicates on one hand from which part of the telecommunication system the alarm is coming, and on the other hand it can indicate separate devices or groups of devices from which the alarm originates. The expert system registers further and calculates trends in the development. This information can be used for predicting an expected traffic situation during av certain period of time. At this consideration is taken to that, for instance, corresponding days in one week to a great extent is similar to the traffic situation during corresponding days and points of time in a closely located week. This gives good opportunities to predict the expected traffic situation and preadjust the threshold values with regard to that. Further the prediction is used, from the real situation, to appoint the expected traffic situation during the nearest coming period of time.

The invention thus allows that the supervision of for instance a mobile telephone system is made much more effective. In the systems of to-day, where the supervision mainly is made by control of traffic load and different counters in the mobile telephone exchanges, MTX and MSC, this is performed manually. A very rapid detection of fault situations can at this be achieved, contrary to with the former systems where long time could elapse before a fault was detected. Further problems in the switching systems of to-day are avoided, where the threshold values must be set with large margins to cover all imaginable situations. Furthermore the threshold value is allowed to vary during the course of the day with consideration taken to the real traffic situation. Further the invention gives possibility to store and compare periods where the traffic situation is equivalent.

The invention further allows that threshold values can be arranged for more parameters than what is normally done in the systems of to-day. The invention thus allows that a more delicate instrument for detection of faults in a telecommunication system is achieved.

The invention is not restricted to the in the above shown embodiment, but may be subjected to modifications within the frame of the following patent claims.

## Claims

1. Method for supervision of mobile telephone systems where parameters in the system are registered and obtained values of the parameters indicate the functionality of the system, threshold values for the parameters being appointed by an expert system (3), the registered parameter values and traffic situations being stored and used at future appointment of threshold values, the threshold values being appointed with an increasing accuracy, at which faults in the system are noticeable at an early stage, **characterized in that** the threshold values for the parameters are appointed with regard to time of year, weekday, time of the twenty-four hour period and the current traffic situation, **in that** the threshold values are adjusted continuously during operation, and **in that** the threshold values are adjusted with regard to registered trend changes.

2. Method according to claim 1, **characterized in that** the threshold values are appointed individually for the different parts of the system.

3. Method according to any of the previous claims, **characterized in that** alarm is given when any of the parameters does not fulfil the threshold values.

4. Method according to any of the previous claims, **characterized in that** the part of the system which is indicated as faulty is pointed out.

5. Method according to any of the previous claims, **characterized in that** trend changes are predicted with regard to the present traffic situation and history.

6. Device for supervision of telephone systems where means (2) in the system register parameter values, which indicate the functionality of the system, said device being arranged to take into consideration the current traffic situation and chronological data, said device comprising an expert system (3) and being arranged to appoint threshold values which the different parts of the system shall fulfil, and the device being arranged to store registered parameter values and traffic situations, threshold values being appointed with increasing accuracy, at which the device is arranged to give an alarm and point out faulty parts in the system, **characterized in that** the device is arranged to appoint the threshold values with regard to the traffic situation, season, weekday and hour of the twenty-four hours, **in that** the device is arranged to continuously change the threshold values during operation, and **in that** the device is arranged to appoint the threshold values with regard to the appointment and prediction of changes in the traffic situation.

7. Device according to claim 6, **characterized in that** the device takes into consideration the obtained history at the appointment of the threshold values.

8. Device according to any of the claims 6 or 7, **characterized in that** the device is arranged to make the mentioned change of the threshold values individually in the different parts of the system.

9. Device according to any of the claims 6 - 8, **characterized in that** the device is arranged to predict a current traffic situation and initially appoint the threshold values.

10. Device according to any of the claims 6 - 9, **characterized in that** the device is arranged to appoint faults in the system and its different parts with an increasing accuracy.

## Patentansprüche

1. Verfahren zum Überwachen von Mobiltelefonsystemen, wo Parameter in dem System registriert werden und erhaltene Werte der Parameter die Funktionalität des Systems anzeigen, Schwellwerte für die Parameter durch ein Expertensystem (3) zugeteilt werden, die registrierten Parameterwerte und Verkehrssituationen gespeichert werden und bei zukünftiger Bestimmung von Schwellwerten verwendet werden, wobei die Schwellwerte mit anwachsender Genauigkeit bestimmt werden, mit der Fehler im System in einem frühen Stadium bemerkbar sind, **dadurch gekennzeichnet, daß** die Schwellwerte für die Parameter in Bezug auf die Jahreszeit, den Wochentag, den. Zeitpunkt der vierundzwanzig Stunden Periode und die gegenwärtige Verkehrssituation bestimmt werden, daß die Schwellwerte dauernd während des Betriebs angepaßt werden, und daß die Schwellwerte in Bezug auf registrierte Trendänderungen angepaßt werden.

2. Verfahren nach Anspruch 1, **dadurch gekennzeichnet, daß** die Schwellwerte individuell für die unterschiedlichen Teile des Systems zugeteilt werden.

3. Verfahren nach einem der vorangehenden Ansprüche, **dadurch gekennzeichnet, daß** Alarm ausgelöst wird, wenn einer der Parameter nicht die Schwellwerte erfüllt.

4. Verfahren nach einem der vorangehenden Ansprüche, **dadurch gekennzeichnet, daß** der Teil des Systems, der als fehlerhaft angezeigt wird, angezeigt wird.

5. Verfahren nach einem der vorangehenden Ansprüche, **dadurch gekennzeichnet, daß** Trendänderungen in Bezug auf die gegenwärtige Verkehrssituation und die Vergangenheit vorhergesagt werden.

6. Vorrichtung für die Überwachung von Telefonsystemen, wo Mittel (2) im System Parameterwerte registrieren, die die Funktionalität des Systems anzeigen, welche Vorrichtung so ausgebildet ist, daß sie die gegenwärtige Verkehrssituation und chronologische Daten in Betracht zieht, welche Vorrichtung ein Expertensystem (3) aufweist und so ausgebildet ist, daß sie Schwellwerte bestimmt, die die unterschiedlichen Teile des Systems erfüllen sollen, und daß die Vorrichtung so ausgebildet ist, daß sie registrierte Parameterwerte und Verkehrssituationen speichert, wobei Schwellwerte mit anwachsender Genauigkeit bestimmt werden, wobei die Vorrichtung so ausgebildet ist, einen Alarm auszulösen und fehlerhafte Teile im System anzuzeigen, **dadurch gekennzeichnet, daß** die Vorrichtung dazu ausgebildet ist, die Schwellwerte in Bezug auf die Verkehrssituation, Jahreszeit, Wochentag und Stunde der vierundzwanzig Stunden zu bestimmen, daß die Vorrichtung dazu ausgebildet ist, dauernd die Schwellwerte während des Betriebs zu ändern, und daß die Vorrichtung dazu ausgebildet ist, die Schwellwerte in Bezug auf die Bestimmung und Vorhersage von Änderungen in der Verkehrssituation zu bestimmen.

7. Vorrichtung nach Anspruch 6, **dadurch gekennzeichnet, daß** die Vorrichtung die erhaltene Historie bei der Bestimmung der Schwellwerte in Betracht zieht.

8. Vorrichtung nach einem der Ansprüche 6 oder 7, **dadurch gekennzeichnet, daß** die Vorrichtung dazu ausgebildet ist, die erwähnte Änderung in den Schwellwerten individuell in den unterschiedlichen Teilen des Systems vorzunehmen.

9. Vorrichtung nach einem der Ansprüche 6 bis 8, **dadurch gekennzeichnet, daß** die Vorrichtung dazu ausgebildet ist, eine gegenwärtige Verkehrssituation vorherzusagen und anfänglich die Schwellwerte zu bestimmen.

10. Vorrichtung nach einem der Ansprüche 6 bis 9, **dadurch gekennzeichnet, daß** die Vorrichtung dazu ausgebildet ist, Fehler im System und seinen unterschiedlichen Teilen mit einer anwachsenden Genauigkeit zu bestimmen.

## Revendications

1. Procédé de supervision de systèmes de téléphonie mobile, dans lequel des paramètres du système sont enregistrés et les valeurs obtenues des paramètres indiquent la fonctionnalité du système, des valeurs de seuil pour les paramètres étant fixées par un système expert (3), les valeurs de paramètre enregistrées et les situations de trafic étant stockées et utilisées lors de la fixation future des valeurs de seuil, les valeurs de seuil étant fixées avec une précision croissante, de sorte que des erreurs dans le système peuvent être notées à un stade précoce, **caractérisé en ce que** les valeurs de seuil pour les paramètres sont fixées en fonction de l'époque de l'année, du jour de la semaine, de l'heure dans la période de 24 heures et de la situation de trafic existante, **en ce que** les valeurs de seuil sont ajustées continuellement pendant le fonctionnement, et **en ce que** les valeurs de seuil sont ajustées en fonction des changements de tendance enregistrés.

2. Procédé selon la revendication 1, **caractérisé en ce que** les valeurs de seuil sont fixées individuellement pour les différentes parties du système.

3. Procédé selon une quelconque des revendications précédentes, **caractérisé en ce qu'**une alarme est émise lorsqu'un quelconque dès paramètres ne répond pas aux valeurs de seuil.

4. Procédé selon une quelconque des revendications précédentes, **caractérisé en ce que** la partie du système qui est indiquée comme défectueuse est précisée.

5. Procédé selon une quelconque des revendications précédentes, **caractérisé en ce que** les changements de tendance sont prédits en fonction de la situation de trafic existante et de l'historique.

6. Dispositif de supervision de systèmes téléphoniques, dans lequel des moyens (2) prévus dans le système enregistrent des valeurs de paramètres qui indiquent la fonctionnalité du système, le dit dispositif étant agencé de manière à prendre en considération la situation de trafic existante et des données chronologiques, le dit dispositif comprenant un système expert (3) et étant prévu pour fixer des valeurs de seuil que les différentes parties du système doivent respecter, et le dispositif étant prévu pour stocker les valeurs de paramètre enregistrées et les situations de trafic, les valeurs de seuil étant fixées avec une précision croissante, de sorte que le dispositif est conçu pour fournir une alarme et préciser les parties défectueuses du système, **caractérisé en ce que** le dispositif est prévu pour fixer les valeurs de seuil en fonction de la situation de trafic, de la saison, du jour de la semaine et de l'heure sur 24 heures, **en ce que** le dispositif est prévu pour changer continuellement les valeurs de seuil pendant le fonctionnement, et **en ce que** le dispositif est prévu pour fixer les valeurs de seuil en fonction de la désignation et de la prédiction de changements dans la situation de trafic.

7. Dispositif selon la revendication 6, **caractérisé en ce que** le dispositif prend en considération l'historique obtenu dans la fixation des valeurs de seuil.

8. Dispositif selon une quelconque des revendications 6 ou 7, **caractérisé en ce que** le dispositif est prévu pour effectuer le changement mentionné des valeurs de seuil individuellement dans les différentes parties du système.

9. Dispositif selon une quelconque des revendications 6 à 8, **caractérisé en ce que** le dispositif est prévu pour prédire une situation de trafic courante et fixer initialement les valeurs de seuil.

10. Dispositif selon une quelconque des revendications 6 à 9, **caractérisé en ce que** le dispositif est prévu pour indiquer des défauts dans le système et ses différentes parties avec une précision croissante.
